# EUROPEAN PATENT SPECIFICATION

(11) **EP 3 772 868 B1**
(45) Date of publication and mention of the grant of the patent: **08.05.2024**
(21) Application number: 20189404.5
(22) Date of filing: 04.08.2020
(51) Int. Cl.: H05B 3/84

(54) **WINDOW ASSEMBLY WITH SOLDERLESS ELECTRICAL CONNECTOR**
FENSTERANORDNUNG MIT LÖTFREIEM ELEKTRISCHEM VERBINDER
ENSEMBLE DE FENÊTRE DOTÉ D'UN CONNECTEUR ÉLECTRIQUE SANS SOUDURE

(30) Priority: 05.08.2019 US 201916531934
(43) Date of publication of application: 10.02.2021
(73) Proprietor: AGC Automotive Americas R & D, Inc., Ypsilanti, MI 48197 (US)
(72) Inventor: Imeson, Christopher A., LaSalle, Ontario N9H-2M8 (CA); Cornell, Matt, Monroe, MI 48161 (US)
(74) Representative: Müller-Boré & Partner Patentanwälte PartG mbB

(56) References cited:
- WO-A2-2014/025991
- US-A1- 2007 029 301
- US-A1- 2017 338 575

## Description

### TECHNICAL FIELD

The present disclosure relates generally to window assemblies, and more specifically to a window assembly with an electrically insulated, solderless electrical connector.

### BACKGROUND

Window assemblies for vehicles are often functionalized to include one of more electrical components disposed on the transparent substrate. These electrical components may include, for example, RF antennae or resistive heating elements. An external electrical connection is typically made with these electrical components via a wiring harness that is connected to a printed silver circuit on the glass via an electrical connection element. In typical applications, the electrical connection element is both mechanically and electrically bonded to the printed silver circuit and underlying transparent substrate through a solder joint that is formed between the connection element and the silver circuit.

While lead-based solder has typically been the standard material used to create solder joints, various corporate practices and international agreements have restricted the use of lead-based solders. Unfortunately, lead-free alternative solders generally have lower mechanical strength and thermal stability than comparable lead-based solders. Furthermore, better performing lead-free solders typically are composed of one or more rare earth metals, such as Indium, that are, at times in scarce supply.

As such, there is a need for a means of reliably attaching an electrical connection element to a silver circuit on a glass window substrate that does not rely on lead-free solders.

While this provided background description attempts to clearly explain certain electrical-connector-related terminology, it is meant to be illustrative and not limiting.
US 2007/029301 A1 describes a terminal mounting structure for a window pane for reliable attaching a terminal to a glass surface of the window pane using minimal numbers of parts and manufacturing steps, wherein the terminal mounting structure has a terminal for electric connection, which is in contact with a conductive part provided on a glass surface of the window pane and wherein the terminal mounting structure is fixed to the glass surface through a resin material attached to the glass surface.
US 2017/338575 A1 describes a male connector which includes a housing fixed to a base, a holding unit supported in such a manner as to enable displacement with respect to the housing and an elastically deformable male terminal held by the holding unit.
WO 2014/025991 A2 describes a connector for attachment to glass for connecting an electrically conductive substrate to an electric conduit, wherein the connector includes an electrically non-conductive housing and an electrically conductive insert.

### BRIEF DESCRIPTION OF THE DRAWINGS

FIG. 1 is a schematic rear perspective view of a window assembly illustrated in an operational relationship with a vehicle.
FIG. 2 is a schematic perspective view of an embodiment of a solderless electrical connector attached to a transparent substrate.
FIG. 3 is a schematic partial cross-sectional view of an embodiment of a solderless electrical connector such as show in FIG. 2.
FIG. 4 is a schematic partial exploded view of an underside of a solderless electrical connector such as show in FIG. 2.
FIG. 5 is a schematic partial cross-sectional view of an embodiment of a solderless electrical connector.

### DETAILED DESCRIPTION

The claimed invention is defined by the independent claims, while preferred embodiments form the subject of the dependent claims. The present embodiments discussed below are directed to a solderless electrical connector that may supply electrical power to a circuit disposed on a transparent substrate such as a window. Instead of solder, the present design utilizes a strong adhesive to mechanically bind a connector body to the substrate. Between the body and the substrate is a compressed, electrically conductive, metallic conenctor, such as a foam or a spring, that applies a contact pressure to force an electrically conductive surface (e.g., an electrically conductive metal connector) against the substrate. In doing so, the compliant, metal connector is held in firm mechanical contact with the substrate, thus maintaining a persistent electrical contact with the conductor. Furthermore, the present design addresses upcoming prohibitions on leaded solder without the need to rely on exotic rare earth metals or the need to compromise strength.

"A," "an," "the," "at least one," and "one or more" are used interchangeably to indicate that at least one of the item is present; a plurality of such items may be present unless the context clearly indicates otherwise. All numerical values of parameters (e.g., of quantities or conditions) in this specification, including the appended claims, are to be understood as being modified in all instances by the term "about" whether or not "about" actually appears before the numerical value. "About" indicates that the stated numerical value allows some slight imprecision (with some approach to exactness in the value; about or reasonably close to the value; nearly). If the imprecision provided by "about" is not otherwise understood in the art with this ordinary meaning, then "about" as used herein indicates at least variations that may arise from ordinary methods of measuring and using such parameters. In addition, disclosure of ranges includes disclosure of all values and further divided ranges within the entire range. Each value within a range and the endpoints of a range are hereby all disclosed as separate embodiment. The terms "comprises," "comprising," "including," and "having," are inclusive and therefore specify the presence of stated items, but do not preclude the presence of other items. As used in this specification, the term "or" includes any and all combinations of one or more of the listed items. When the terms first, second, third, etc. are used to differentiate various items from each other, these designations are merely for convenience and do not limit the items.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements, but may include other elements not expressly listed or inherent to such process, method, system, article, device, or apparatus.

Other features and aspects will become apparent by consideration of the following detailed description and accompanying drawings. Before any embodiments of the disclosure are explained in detail, it should be understood that the disclosure is not limited in its application to the details or construction and the arrangement of components as set forth in the following description or as illustrated in the drawings. The disclosure is capable of supporting other embodiments and of being practiced or of being carried out in various ways. It should be understood that the description of specific embodiments is not intended to limit the disclosure from covering all modifications, equivalents and alternatives falling within the spirit and scope of the disclosure. Also, it is to be understood that the phraseology and terminology used herein is for the purpose of description and should not be regarded as limiting.

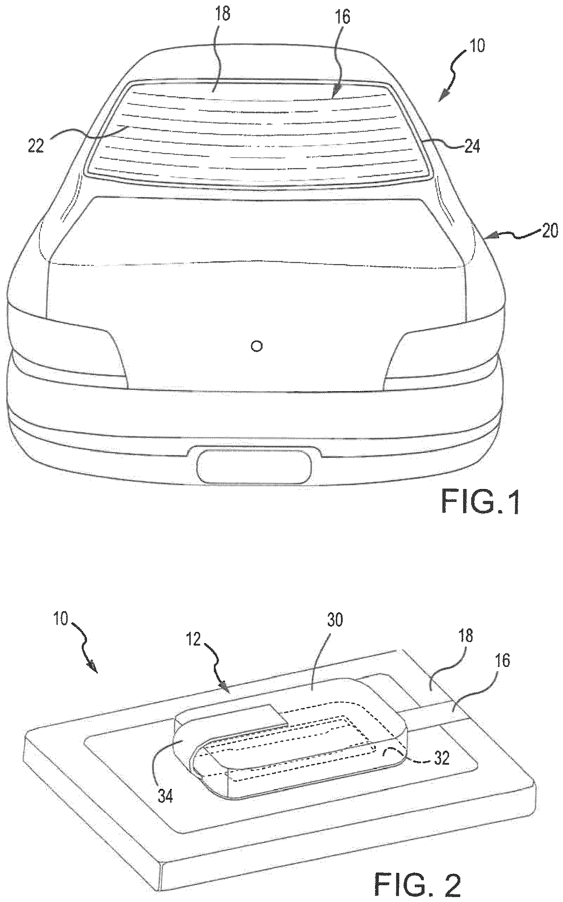

Referring to the drawings, wherein like reference numerals are used to identify like or identical components in the various views, FIGS. 1-2 schematically illustrate a window assembly 10 having a solderless electrical connector 12 that mechanically and electrically couples a wiring harness 14 with a conductive circuit 16 disposed on a transparent/glass substrate 18. The window assembly 10 may be used within an automotive context, such as in an automotive vehicle 20, where one or more electrical components 22 are desirably integrated into or directly coupled with the transparent substrate 18. For example, as generally illustrated in FIG. 1, the electrical component 22 may include one or more resistive heaters operative to locally heat and/or defrost a portion of the transparent substrate 18. Additionally, or alternatively, the one or more electrical components may include one or more RF antennae, LED lights, camera modules, or other such electrical devices.

In most embodiments, the transparent substrate 18 may include a pane of silica glass. In some embodiments, a glass substrate 18 may include various additives to alter the transmissivity of the pane, for example, to provide various levels of tint or coloration. Furthermore, in some embodiments, the transparent substrate 18 may be a laminate that includes one or more layers of both a silica glass and of a polymeric material such as polymethyl methacrylate, polycarbonate, polyvinyl butyral, or the like. In some embodiments, the substrate 18 may alternatively be a polymeric substrate that is entirely made from a transparent polymeric material such as polymethyl methacrylate, polycarbonate, polyvinyl butyral, acrylic, or the like.

The conductive circuit 16 disposed on the transparent substrate may comprise one or more electrical conductors 24 or wires that are bonded to or integrally formed as an outer layer of the substrate 18. The one or more electrical conductors 24 may include, for example, a conductive layer of silver. In other embodiments, the electrical conductor 24 may be made of other conductive metals and/or other conductive or nonconductive materials in addition to, or instead of, silver. The electrical conductor 24 may be a film, a coating, and/or may take any other form so long as the electrical conductor 24 is conductive and serves any function known in the art for such electrical conductors. The electrical conductor 24 may be porous and/or nonporous. In various embodiments, the electrical conductor 24 is a porous silver film. In other embodiments, the electrical conductor 24 may be printed, for example, a screen printed silver film or printed silver circuit.

The conductive circuit 16 and electrical conductor 24 may be an electrical extension of, or may be electrically coupled with the electrical component 22. The conductive circuit 16 may further include one or more bus bars (not shown), resistors, or similar electrical components. It should be appreciated that the wire harness 14 may transfer power from a separate power supply (not shown) to the conductive circuit 16.

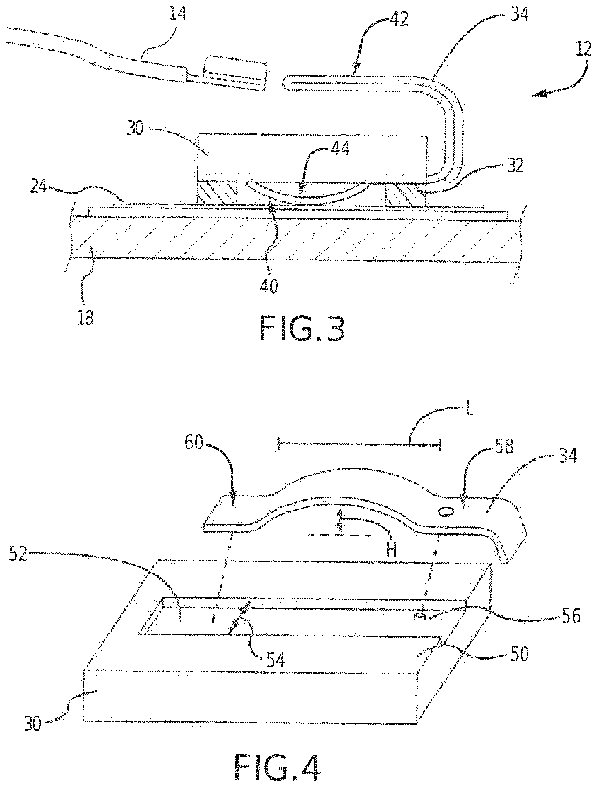

FIGS. 3-4 generally illustrate an embodiment of a solderless electrical connector 12 that mechanically and electrically connects the wiring harness 14 to the conductive circuit 16 disposed on the substrate 18. In this embodiment, the solderless electrical connector 12 includes a cover or body 30, an adhesive 32, and an electrically conductive, elastically compressible connector 34. In a general sense, the body 30 is adhered to the substrate 18 via the adhesive 32, while the connector is elastically compressed between the body and the electrical conductor 24. In doing so, the adhesive 32 serves to maintain a certain minimum contact pressure (and electrical connectivity) between the electrically conductive connector 34 and the conductor 24 on the substrate. Alternative embodiments of similar connectors are shown and described in U.S. Patent Application No. 15/981938, patented as US 10,374,330.

As further shown in FIG. 3, in one embodiment, the connector 34 may extend around a portion of the body 30 and may include both a compressible portion 40 and a connection portion 42. When in a relaxed state (i.e., not elastically compressed), the compressible portion 40 may include a feature 44 that displaces in response to an applied bending or compressive stress, such as being drawn into contact with the substrate 18. In the illustrated example, the feature 44 may be a non-planar bowing of the connector 34 such that, when assembled, it the bowed feature geometry extends away from the body 30 to form a convex protrusion. In one embodiment, this bowed portion may be provided between two planar portions of the connector 34, which would be held in contact with the body 30 when in an assembled state (or during the assembly process). When brought into contact with the conductor 24 on the substrate 18, this convex protrusion may elastically deform into a comparatively flatter state where it may be held in place by the adhesive 32 between the connector body 30 and the substrate 18.

It has been found that the present design produces favorable results (robust, low resistance connection) when the metal connector 34 is formed from a flat sheet of metal that has a uniform thickness of about 0.4 mm. In one embodiment, this flat sheet material may have a single thickness throughout the compressible portion 40, though may be folded over to have a double thickness in the connection portion 42. Doing so would enable a better connection with standard spade-type connectors. When formed from this gauge of metal (e.g., copper), the convex protrusion may desirably have an undeformed aspect ratio (length - measured along the connector body 30, to height - measured normal from the connector body 30) of between about 2:1 and about 9:1 or more preferably between about 2.5:1 and about 5.5:1.

Referring to FIG. 4, in one embodiment, the underside 50 of the body 30 may include a channel 52 that is operative to receive and restrict lateral motion of the metal connector 34. To do so, the channel 52 may have a channel width 54 that is approximately equal to (or marginally over-toleranced relative to) the width of the connector 34. The channel 52 may include a locking feature 56 that prevents longitudinal motion of the connector 34 relative to the body 30 on a proximal end 58 of the compressible portion 40 (i.e., a side closest to the connection portion 42), though may lack any similar constraints on the distal end 60 (i.e., a side furthest from the connection portion 42). In this manner, when the metal connector 34 is elastically compressed, the distal end portion 60 may translate within the channel 52. In one embodiment, the locking feature 56 may be a peg extending from the body 30 that extends through a mating aperture in the metal connector 34.

In the present designs, the adhesive may be provided on the body 30 in the form of a tape. In one configuration, the adhesive/tape may have an undeformed thickness of between about 0.5 mm and about 0.8 mm. Once a protective layer is removed, the adhesive portion of the tape may be flashed with an initiator, such as ultraviolet light, and the connector body 30 and metal connector 34 may be simply placed or adhered to the surface. This greatly decreases both the cycle time and the sensitivity of the assembly (i.e., where the assembly tolerances with a press-on connector are not nearly as tight as with solder). For example, in typical solder applications, forming a joint may have about a 15-20 second cycle time, whereas with the present adhesive-based designs, the cycle time may be reduced to around 10 seconds or less.

In addition to simply being a faster means of forming an electrical connection (when compared to traditional solder joints), the present design is also advantageous over solder for not requiring tightly controlled temperature parameters. More specifically, to form a solder connection on a glass substrate, the time, temperature, and heat flux must be carefully controlled within narrow parameter windows to avoid thermally shocking the glass or inducing excess residual stress on the connection upon cooling (i.e., due to differing coefficients of thermal expansion). Conversely, the present designs may be adhered at room temperature (i.e., without the application of thermal energy), and without the need for down-stream thermal curing.

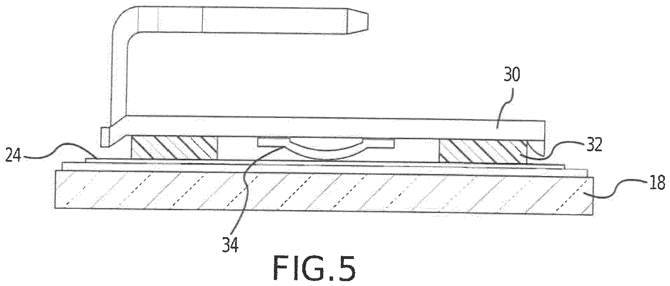

In one embodiment, such as shown in FIGS. 2-4, the body 30 may be formed from an electrically insulating material, such as a polymer, which may prevent inadvertent contact with the conductors 24. In another embodiment, however, the body 30 may be electrically conductive, such as shown in FIG. 5. In this embodiment, the compressible connector 34 is still a spring-like metallic element, however the body 30 may also be electrically conductive and may facilitate an electrical connection with the spring. As shown, in this embodiment, the body 30 may further include the connection portion 42 that may facilitate connection with the wiring harness 14.

As illustrated in FIGS. 2-3, in an embodiment, the body 30 may be bonded to the substrate 18 via the adhesive 32. The compressible connector 34 may be over-dimensioned such that when the body 30 is firmly affixed to the substrate 18, the compressible connector 34 is elastically compressed between the body 30 and the substrate 18 (i.e., the height/thickness H, measured normal to the surface of the substrate 18 is compressed between the body 30 and the substrate 18). In doing so, the elastic restorative force and resulting contact pressure from the compressed connector 34 may directly encourage robust electrical contact between the connector 12 and the circuit 16.

In some embodiments, the channel 52 or other internal concavity may define an internal connector volume. Functionally, in such embodiments, the body 30 may encapsulate the electrical connection formed with the circuit 16 to both protect the integrity of the connection and inhibit foreign objects or fluids from contacting and/or degrading the interface.

Regardless of whether the connector body is solid, or hollow/concave, in some embodiments, the body 30 may be formed from a polymer or polymeric material, which may provide electrical insulation about the joint. The polymer body may comprise one or more thermoplastic materials and/or thermoset materials. Non-limiting examples of suitable polymers include thermoplastic elastomers (TPE), thermoplastic vulcanizates (TPV), polyphthalamides (PPA), and thermoplastic polyolefins (TPO). Specific non-limiting examples include thermoplastic styrene (TPS), polyurethane, polyvinyl chloride (PVC), Acetal, acrylic, polyamide (PA6 or PA66), Polytetrafluoroethylene (PTFE), and ester based thermoplastic elastomers (E-TPE). It should also be appreciated that the body 30 may be made of non-polymeric materials.

As noted above, the body 30 may be secured in place over the compressible connector 34 by directly adhering it to the substrate 18 via the adhesive 32. More specifically, as shown in FIGS. 2-4, the adhesive 32 may be disposed between an outer peripheral edge portion or surface of the body 30 and the substrate 18. As best shown in FIG. 2, in one embodiment, the adhesive 32 may extend around the entire perimeter of the body 30. To eliminate the need for complex fixturing, it is preferable for the adhesive 32 to cure via one or more means that do not require thermal initiation. Said another way, while the use of thermally curing adhesives may be efficient in some specific applications, it may also present a need for complex fixturing within an oven or autoclave that may be prohibitive in other applications. To address this issue, the adhesive 32 used to secure the body of the connector to the substrate 18 may be cured (or the curing may be initiated) through a non-thermal means, such as, for example, through the use of ultra-violet radiation that may be applied via a conveyer-based oven containing ultra-violet lights. To permit this, the adhesive may include a photoinitiator compound that begins the cross-linking process upon exposure to a predetermined wavelength of light.

A method of making a solderless electrical connection with an electrical conductor 24 disposed on a transparent substrate 18 may generally begin by preparing the transparent substrate 18 to include an integral electrical conductor 24 and a circuit 16. This step may include any needed heat-treating processes, laminating processes, autoclaving processes, tempering processes, screen printing of circuitry, and any other such processes that may necessarily be performed to the substrate 18 and/or circuit 16.

Following this, the connector 12 may be loosely assembled with the metal connector 34 provided in an abutting relationship with the body 30 portion of the connector 12. In the embodiment described above, this may include providing the body so that the metal connector 34 extends to opposing sides of the body 30.

Depending on the specific configuration, an adhesive 32 may be applied to the body 30 either before the assembly of the connector 34 and the body 30. In some embodiments, the adhesive 32 may be applied in a liquid form, such as being screened or printed onto the body 30. In other embodiments, the adhesive 32 may be applied by sticking it onto the body as would occur with a structural bonding tape.

While in this form, the connector 12 may be stored for a period of time prior to final assembly. Once final assembly is desired, crosslinking/curing of the adhesive 32 may be initiated by applying a stimulus that is designed to activate the plasticizer compounded into the adhesive. In one embodiment, the curing is photoinitiated, such as by exposing the adhesive momentarily to an ultraviolet light source. In such an embodiment, the curing process should be self-sustaining once externally initiated, yet should be slow enough to provide some minimum amount of working time (e.g., greater than about 20 seconds) so that an assembly technician can perform the remaining steps. In one example, this self-sustaining curing may be facilitated by providing one or more of a catalyst and an initiator within a plurality of photo-sensitive micro capsules that may release the catalyst and/or initiator upon exposure to a light source such as an ultraviolet lamp.

The connector 12 is then positioned in a contacting and abutting relationship to the substrate such that the compressible connector 34 includes a portion disposed between the body 30 and the substrate 18, and such that the adhesive 32 makes contact with the substrate 18 or an element that is integral with the substrate, such as the electrical conductor 24 or a ceramic coating.

Force may then be applied to the connector body 30 to compress the compressible portion 40 of the connector 34 in a direction normal to the surface of the substrate 18 until the adhesive 32 contacts the substrate 18. In one embodiment, the force may be maintained for a sufficient amount of time until the adhesive can resist the elastic expansion of the compressible portion 40 . In a more preferred embodiment, however, the green strength of the adhesive (i.e., the initial contact bonding strength) should exceed the amount of force exerted by the compressible portion 40 of the connector 34 such that the compressible connector 34 may be held in an elastically deformed state upon initial contact between the adhesive 32 and the substrate 18. In such an embodiment, the body 30 of the connector 12 need not be held in place or externally fixtured after initial assembly, which may reduce the cost and complexity of assembly.

In other embodiments, the cure-initiating stimulus may be applied continuously throughout the curing process after the body 30 is applied to the substrate 18. Such a technique has additional limitations since it may only be applicable if the location of the adhesive was on a transparent portion of the substrate (i.e., transparent to whatever stimulus is being applied) so that the stimulus may reach the adhesive through the substrate 18. This may not be feasible in many cases due to typical black masking layers that are used to improve the aesthetics by eliminating the ability to see circuitry and connections. If the adhesive is visible through the substrate, however, then the method may include applying the body 30 to a portion of the substrate 18 that is transparent to ultraviolet light, and exposing the adhesive to the stimulus to the ultraviolet through the opposite side of the substrate 18 to cure the adhesive 32.

As discussed above, in a preferred embodiment, the chosen adhesive 32 should have a green strength that is sufficient to maintain the compressible portion 40 of the metal connector 34 in the elastically deformed state without the need for external fixturing during the curing process.

The present solderless connector 12 advantageously eliminates the need for solder by applying an elastic contact pressure between both the substrate 18 and the metal connector 34. It relies on a robust adhesive to mechanically secure the connector 12 to the substrate (i.e., where the adhesive may provide an even superior and simpler bond to solder). Such a design both eliminates the need for expensive and/or performance-compromised lead-free solders, while not introducing any thermal expansion concerns that may damage the window due to differing thermal expansion rates (since the metal connector 34 is not rigidly attached to the substrate 18).

## Claims

1. A window assembly (10) comprising:
a transparent substrate (18);
an electrical conductor (24) provided on a surface of the substrate; and
a solderless electrical connector (12) for energizing the electrical conductor, the solderless electrical connector (12) comprising:
an electrically insulating connector body (30);
an electrically conductive metallic connector (34) including a compressible portion (40) and a connection portion (42), the compressible portion being elastically deformed between the connector body and the electrical conductor, wherein the metallic connector is in electrical communication with the electrical conductor of the substrate; and
an adhesive (32) disposed between the connector body and the substrate to adhere the connector body to the substrate while maintaining the metallic connector in an elastically deformed state;
**characterised in that** the connector body includes a channel (52), and wherein the compressible portion of the metallic connector (34) at least partially extends within the channel (52) such that a distal end (60) of the compressible portion (40) furthest from the connection portion (42) is configured to translate within the channel (52).

2. The window assembly (10) of claim 1, wherein the channel (52) is operative to restrict lateral motion of the metallic connector (34).

3. The window assembly (10) of claim 1 or 2, wherein longitudinal motion of the metallic connector (34) relative to the connector body (30) is prevented on a proximal end (58) of the compressible portion (40) closest to the connection portion (42).

4. The window assembly (10) of any one of claims 1 to 3, wherein a green strength of the adhesive (32), which is an initial contact bonding strength of the adhesive, is configured to exceed the amount of force exerted by the compressible portion (40) of the metallic connector (34) such that the metallic connector is held in the elastically deformed state upon initial contact between the adhesive and the substrate (18) without external fixturing.

5. The window assembly (10) of any one of claim 1 to 4, wherein the adhesive (32) comprises a photoinitiator operative to initiate curing of the adhesive when exposed to a predetermined wavelength of light.

6. The window assembly (10) of any one of claims 1 to 5, wherein the connection portion is operative to facilitate a mechanical and electrical connection with a wiring harness (14),
wherein optionally the connection portion and the compressible portion are integral with each other; and/or
wherein optionally the connector body extends between the connection portion and the compressible portion.

7. The window assembly (10) of any one of claims 1 to 6, wherein the connector body (30) includes a restraining feature (56) that extends from a surface of the connector body facing the transparent substrate (18), the restraining feature extending through a portion of the metallic connector (34); and
wherein the channel (52) restrains the metallic connector from movement in a lateral direction and the restraining feature restrains a portion of the metallic connector from movement in a longitudinal direction relative to the connector body, and wherein the longitudinal direction and the lateral direction are orthogonal to each other,
wherein optionally the metallic connector is bowed away from the surface of the connector body that faces the transparent substrate (18).

8. The window assembly (10) of any one of claims 1 to 7, wherein the metallic connector (34) includes a portion that is bowed away from the connector body (30), the bowed portion having a length and a height, measured when the metallic connector is in an undeformed state, the height measured relative to the connector body; and
wherein the bowed portion has a length-to-height aspect ratio of between 2:1 and 9:1.

9. The window assembly (10) of any one of claims 1 to 8, wherein the adhesive (32) comprises a structural bonding tape,
wherein optionally the structural bonding tape has a thickness of between about 0.5 mm and about 0.8 mm.

## Patentansprüche

1. Fensteranordnung (10), aufweisend:
ein transparentes Substrat (18);
einen elektrischen Leiter (24), der auf einer Oberfläche des Substrats vorgesehen ist; und
einen lötfreien elektrischen Verbinder (12) zum Zuführen von elektrischen Strom an den elektrischen Leiter, wobei der lötfreie elektrische Verbinder (12) aufweist:
einen elektrisch isolierenden Verbinderkörper (30);
einen elektrisch leitenden Metallverbinder (34), der einen komprimierbaren Abschnitt (40) und einen Verbindungsabschnitt (42) aufweist, wobei der komprimierbare Abschnitt zwischen dem Verbinderkörper und dem elektrischen Leiter elastisch verformt wird, wobei der Metallverbinder in elektrischer Verbindung mit dem elektrischen Leiter des Substrats ist; und
einen Klebstoff (32), der zwischen dem Verbinderkörper und dem Substrat angeordnet ist, um den Verbinderkörper an dem Substrat anzukleben, während der Metallverbinder in einem elastisch verformten Zustand gehalten wird;
**dadurch gekennzeichnet, dass**
der Verbinderkörper einen Kanal (52) aufweist, und wobei der komprimierbare Abschnitt des Metallverbinders (34) sich zumindest teilweise innerhalb des Kanals (52) erstreckt, so dass ein distales Ende (60) des komprimierbaren Abschnitts (40), das am weitesten von dem Verbindungsabschnitt (42) entfernt ist, eingerichtet ist, sich innerhalb des Kanals (52) zu bewegen.

2. Fensteranordnung (10) nach Anspruch 1, wobei der Kanal (52) dahingehend betreibbar ist, die seitliche Bewegung des Metallverbinders (34) einzuschränken.

3. Fensteranordnung (10) nach Anspruch 1 oder 2, wobei Längsbewegung des Metallverbinders (34) relativ zu dem Verbinderkörper (30) an einem proximalen Ende (58) des komprimierbaren Abschnitts (40), das dem Verbindungsabschnitt (42) am nächsten liegt, verhindert wird.

4. Fensteranordnung (10) nach einem der Ansprüche 1 bis 3, wobei eine Grünfestigkeit des Widerstands (32), der ein Anfangskontakt-Haftfestigkeit des Klebstoffs ist, derart konfiguriert ist, dass er den Betrag der von dem komprimierbaren Abschnitt (40) des Metallverbinders (34) ausgeübten Kraft übersteigt, so dass der Metallverbinder nach anfänglichem Kontakt zwischen dem Klebstoff und dem Substrat (18) ohne äußere Befestigung in dem elastisch verformten Zustand gehalten wird.

5. Fensteranordnung (10) nach einem der Ansprüche 1 bis 4, wobei der Klebstoff (32) einen Fotoinitiator aufweist, der dahingehend betreibbar ist, die Aushärtung des Klebstoffs auszulösen, wenn er einer vorbestimmten Wellenlänge von Licht ausgesetzt wird.

6. Fensteranordnung (10) nach einem der Ansprüche 1 bis 5, wobei der Verbindungsabschnitt dahingehend betreibbar ist, eine mechanische und elektrische Verbindung mit einem Kabelbaum (14) zu erleichtern,
wobei optional der Verbindungsabschnitt und der komprimierbare Abschnitt integral miteinander sind; und/oder
wobei der Verbinderkörper sich optional zwischen dem Verbindungsabschnitt und dem komprimierbaren Abschnitt erstreckt.

7. Fensteranordnung (10) nach einem der Ansprüche 1 bis 6, wobei der Verbinderkörper (30) ein Beschränkungsmerkmal (56) aufweist, das sich von einer Oberfläche des Verbinderkörpers, die dem transparenten Substrat (18) zugewandt ist, erstreckt, wobei sich das Beschränkungsmerkmal durch einen Abschnitt des Metallverbinders (34) erstreckt; und
wobei der Kanal (52) die Bewegung des Metallverbinders in einer seitlichen Richtung einschränkt und das Beschränkungsmerkmal die Bewegung eines Abschnitts des Metallverbinders in einer Längsrichtung relativ zu dem Verbinderkörper einschränkt, und wobei die Längsrichtung und die seitliche Richtung orthogonal zueinander sind,
wobei optional der Metallverbinder gegenüber der Oberfläche des Verbinderkörpers, die dem transparenten Substrat (18) zugewandt ist, gebogen ist.

8. Fensteranordnung (10) nach einem der Ansprüche 1 bis 7, wobei der Metallverbinder (34) einen Abschnitt aufweist, der von dem Verbinderkörper (30) weg gebogen ist, wobei der gebogene Abschnitt eine Länge und eine Höhe aufweist, gemessen, wenn sich der Metallverbinder in einem nicht verformten Zustand befindet, wobei die Höhe relativ zu dem Verbinderkörpers gemessen wird; und
wobei der gebogene Abschnitt ein Seitenverhältnis von Länge zu Höhe zwischen 2:1 und 9:1 aufweist.

9. Fensteranordnung (10) nach einem der Ansprüche 1 bis 8, wobei der Klebstoff (32) ein Strukturklebeband aufweist,
wobei das Strukturklebeband optional eine Dicke zwischen etwa 0,5 mm und etwa 0,8 mm aufweist.

## Revendications

1. Ensemble fenêtre (10) comprenant :
un substrat transparent (18) ;
un conducteur électrique (24) disposé sur une surface du substrat ; et
un connecteur électrique sans soudure (12) permettant de mettre sous tension le conducteur électrique,
le connecteur électrique sans soudure (12) comprenant :
un corps (30) de connecteur, électriquement isolant ;
un connecteur métallique électroconducteur (34), comportant une partie compressible (40) et une partie de connexion (42), la partie compressible étant déformée élastiquement entre le corps du connecteur et le conducteur électrique, le connecteur métallique étant en communication électrique avec le conducteur électrique du substrat ; et
un adhésif (32) disposé entre le corps du connecteur et le substrat afin d'adhérer le corps du connecteur au substrat, tout en maintenant le connecteur métallique en état déformé élastiquement ;
**caractérisé en ce que**
le corps du connecteur comprend un canal (52), et la partie compressible du connecteur métallique (34) s'étend au moins partiellement à l'intérieur du canal (52), de sorte qu'une extrémité distale (60) de la partie compressible (40), la plus éloignée de la partie de connexion (42), soit conçue pour se déplacer à l'intérieur du canal (52).

2. L'ensemble fenêtre (10) de la revendication 1, dans lequel le canal (52) a pour fonction de restreindre le mouvement latéral du connecteur métallique (34).

3. L'ensemble fenêtre (10) des revendications 1 ou 2, dans lequel le mouvement longitudinal du connecteur métallique (34) par rapport au corps (30) du connecteur est empêché sur une extrémité proximale (58) de la partie compressible (40), la plus proche de la partie de connexion (42).

4. L'ensemble fenêtre (10) de l'une quelconque des revendications 1 à 3, dans lequel une résistance à vert de l'adhésif (32), laquelle est une résistance d'adhésion de contact initial de l'adhésif, est conçue pour dépasser la quantité de force exercée par la partie compressible (40) du connecteur métallique (34), de sorte que le connecteur métallique soit maintenu dans l'état déformé élastiquement lors du contact initial entre l'adhésif et le substrat (18) sans fixation extérieure.

5. L'ensemble fenêtre (10) de l'une quelconque des revendications 1 à 4, dans lequel l'adhésif (32) comprend un photo-initiateur ayant pour fonction de déclencher le durcissement de l'adhésif lors de l'exposition à une longueur d'onde de lumière prédéfinie.

6. L'ensemble fenêtre (10) de l'une quelconque des revendications 1 à 5, dans lequel la partie de connexion a pour fonction de faciliter une connexion mécanique et électrique avec un faisceau (14) de câbles,
dans lequel, optionnellement, la partie de connexion et la partie compressible sont solidaires l'une de l'autre ; et/ou
dans lequel, optionnellement, le corps du connecteur s'étend entre la partie de connexion et la partie compressible.

7. L'ensemble fenêtre (10) de l'une quelconque des revendications 1 à 6, dans lequel le corps (30) du connecteur comprend un accessoire de restriction (56) s'étendant à partir d'une surface du corps du connecteur faisant face au substrat transparent (18), l'accessoire de restriction s'étendant à travers une partie du connecteur métallique (34) ; et
dans lequel le canal (52) restreint le déplacement du connecteur métallique dans une direction latérale et l'accessoire de restriction restreint le déplacement d'une partie du connecteur métallique dans une direction longitudinale par rapport au corps du connecteur, et dans lequel la direction longitudinale et la direction latérale sont orthogonales l'une à l'autre,
dans lequel, optionnellement, le connecteur métallique est courbé à l'opposé de la surface du corps du connecteur faisant face au substrat transparent (18).

8. L'ensemble fenêtre (10) de l'une quelconque des revendications 1 à 7, dans lequel le connecteur métallique (34) comprend une partie qui est courbée à l'opposé du corps (30) du connecteur, la partie courbée présentant une certaine longueur et une certaine hauteur, mesurées lorsque le connecteur métallique est en état non déformé, la hauteur étant mesurée par rapport au corps du connecteur ; et
dans lequel la partie courbée présente un rapport de forme longueur sur hauteur compris entre 2:1 et 9:1.

9. L'ensemble fenêtre (10) de l'une quelconque des revendications 1 à 8, dans lequel l'adhésif (32) comprend un ruban de collage structural,
dans lequel, optionnellement, le ruban de collage structural présente une épaisseur comprise entre environ 0,5 mm et environ 0,8 mm.
